# EUROPEAN PATENT APPLICATION

(11) **EP 4 693 944 A1**
(43) Date of publication of application: **11.02.2026**
(21) Application number: 24779668.3
(22) Date of filing: 18.03.2024
(51) Int. Cl.: H04B 7/155, H04W 84/06

(54) **INFORMATION PROCESSING METHOD, PROGRAM, AND INFORMATION PROCESSING DEVICE**

(30) Priority: 31.03.2023 JP 2023058838
(71) Applicant: Axelspace Corporation, Tokyo, 103-0023 (JP)
(72) Inventor: HIGAKI, Makoto, Tokyo 103-0023 (JP); SUDO, Jumpei, Tokyo 103-0023 (JP); YONEMOTO, Akihiro, Tokyo 103-0023 (JP)
(74) Representative: Cabinet Beaumont
(86) International application number: PCT/JP2024/010571
(87) International publication number: WO 2024/203543

(57) **Abstract**

An information processing method includes: causing a computer to execute processing of acquiring orbital information of a specific artificial satellite that has reserved communication with a specific ground station in a time slot starting from a specific time, among a plurality of artificial satellites placed in a predetermined orbit, and orbital information and communication speeds of other artificial satellites other than the specific artificial satellite that have completed communication with the specific ground station before the specific time; causing the computer to execute processing of deriving a correlation between orbital information and a communication speed of an artificial satellite based on the orbital information and the communication speeds of the other artificial satellites; causing the computer to execute processing of calculating a communication speed of the specific artificial satellite based on the derived correlation and the orbital information of the specific artificial satellite; and causing the computer to execute processing of transmitting the calculated communication speed to the specific artificial satellite.

## Description

### Technical Field

The present invention relates to an information processing method, a program, and an information processing apparatus.

### Background Art

As a next-generation communication system using artificial satellites, the construction of a satellite constellation in which a plurality of artificial satellites cooperate to perform communication is expected (for example, Patent Literature 1). However, in order to achieve line speeds comparable to those of terrestrial networks, it is necessary to use electromagnetic waves in a high frequency band for communication, which are more susceptible than conventional microwaves to the effects of the atmosphere, clouds, water vapor, dust particles, and the like. In addition, in satellite communications, systems generally have fewer ground stations than artificial satellites, and accordingly, communication is usually performed by reserving the time slots required for the communication in advance. For this reason, it would be beneficial to be able to grasp the environment that affects communication in real time and maximize the potential of communication speed at each point in time.

### Citation List

### Patent Literature:

Patent Literature 1: Japanese Patent Application Laid-Open No. 2019-47243 Summary

### Technical Problems

According to one aspect, an object is to provide an information processing method and the like that can suitably perform communication between an artificial satellite and a ground station.

### Solution to Problems

According to one aspect, an information processing method includes: causing a computer to execute processing of acquiring orbital information of a specific artificial satellite that has reserved communication with a specific ground station in a time slot starting from a specific time, among a plurality of artificial satellites placed in a predetermined orbit, and orbital information and communication speeds of other artificial satellites other than the specific artificial satellite that have completed communication with the specific ground station before the specific time; causing the computer to execute processing of deriving a correlation between orbital information and a communication speed of an artificial satellite based on the orbital information and the communication speeds of the other artificial satellites; causing the computer to execute processing of calculating a communication speed of the specific artificial satellite based on the derived correlation and the orbital information of the specific artificial satellite; and causing the computer to execute processing of transmitting the calculated communication speed to the specific artificial satellite.

### Advantageous Effects of Invention

According to one aspect, it is possible to suitably perform communication between an artificial satellite and a ground station.

### Brief Description of Drawings

FIG. 1 is an explanatory diagram showing an example of the configuration of a satellite communication system.
FIG. 2 is a block diagram showing an example of the configuration of a server.
FIG. 3 is an explanatory diagram showing an example of the record layout of a communication history DB.
FIG. 4 is an explanatory diagram showing the orbit of an artificial satellite.
FIG. 5 is a flowchart showing an example of a processing procedure executed by a server.
FIG. 6 is an explanatory diagram showing an overview of Embodiment 2.
FIG. 7 is a flowchart showing an example of a processing procedure executed by a server according to Embodiment 2.
FIG. 8A is an explanatory diagram showing an overview of Embodiment 3.
FIG. 8B is an explanatory diagram showing an overview of Embodiment 3.
FIG. 9 is a flowchart showing an example of a processing procedure executed by a server according to Embodiment 3.
FIG. 10 is an explanatory diagram showing an overview of Embodiment 4.
FIG. 11 is a flowchart showing an example of a processing procedure executed by a server according to Embodiment 4.

### Description of Embodiments

Hereinafter, the present invention will be described in detail with reference to the diagrams showing embodiments thereof.

### (Embodiment 1)

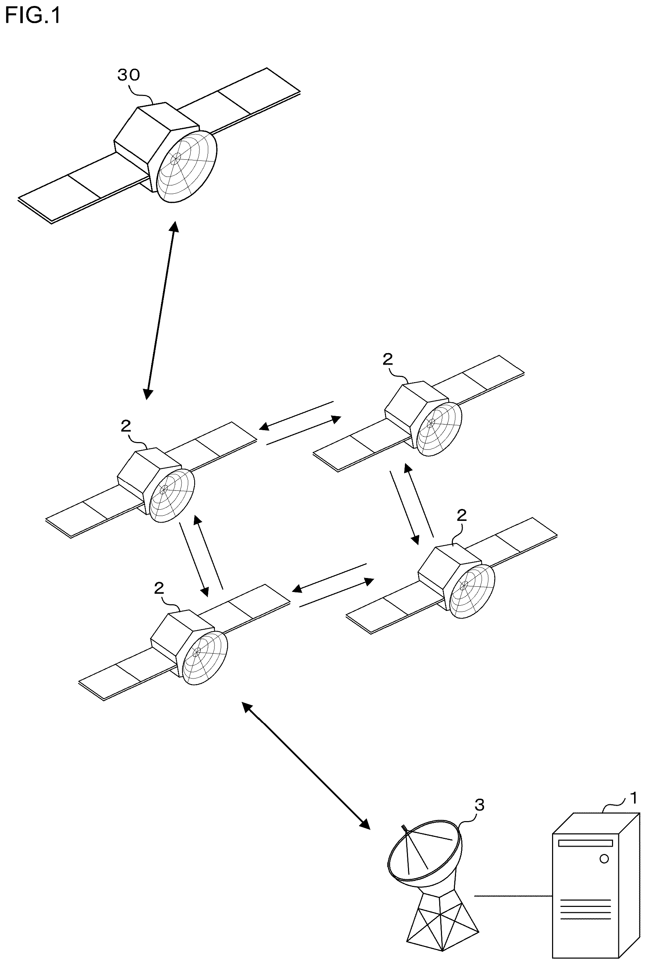

FIG. 1 is an explanatory diagram showing an example of the configuration of a satellite communication system. In the present embodiment, a satellite communication system will be described that predicts (calculates) a communication speed between an artificial satellite 2 scheduled to perform communication, among a plurality of artificial satellites 2, 2, 2, ..., and a ground station 3 from the communication history of other artificial satellites 2 that have completed communication with the ground station 3. The satellite communication system includes an information processing apparatus 1, the artificial satellite 2, and the ground station 3.

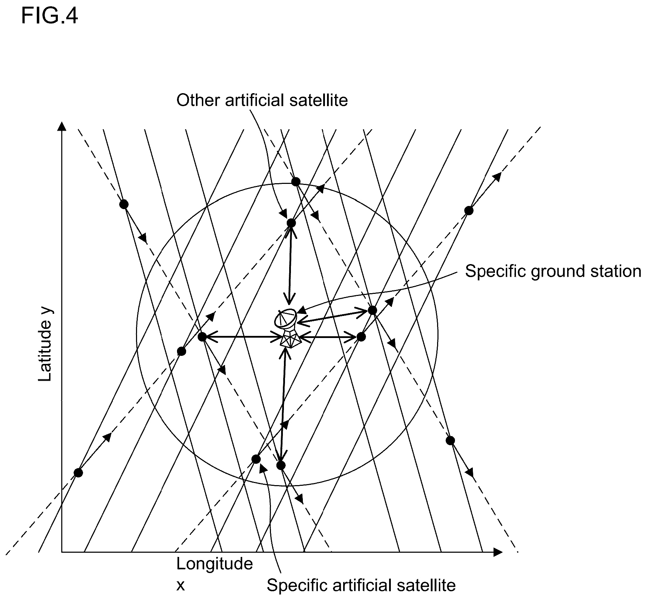

The artificial satellite 2 is placed in a predetermined orbit to communicate with the ground station 3. In the present embodiment, the orbits of the plurality of artificial satellites 2, 2, 2, ... are arranged so as to form a grid pattern (see FIG. 4), thereby forming a satellite constellation as a whole.

The ground station 3 is a radio facility on the ground for communicating with the artificial satellite 2, and is formed by radio equipment such as an antenna. Although only one ground station 3 is shown in FIG. 1, the present embodiment will be described assuming that a plurality of ground stations 3, 3, 3, ... are present.

The information processing apparatus 1 is an information processing apparatus capable of performing various information processes and transmitting and receiving information. For example, the information processing apparatus 1 is a server computer or a personal computer. In the present embodiment, it is assumed that the information processing apparatus 1 is a server computer, and the information processing apparatus 1 will be referred to as a server 1 below for the sake of simplicity. The server 1 is connected to the ground station 3, and manages communication between the artificial satellite 2 and the ground station 3. Specifically, as described below, when a specific artificial satellite 2 communicates with a specific ground station 3, the server 1 predicts (calculates) the communication speed between the specific artificial satellite 2 and the ground station 3 based on the communication history between other artificial satellites 2 and the ground station 3, and transmits the predicted communication speed to the specific artificial satellite 2.

The artificial satellite 2 can perform the communication at the maximum communication speed by communicating with the ground station 3 according to the transmitted communication speed. For example, since the restrictions on the data size of downlink from satellites, such as earth observation data, are reduced, in the case of photo data such as satellite images, the reduction in resolution, restrictions on photo size, or restrictions on the number of images captured are reduced. Therefore, it is possible to improve the convenience for earth observation service providers. In addition, in the case of mobile phone services through satellite communications, which are being studied by the mobile communications standardization organization 3GPP (3rd Generation Partnership Project; registered trademark) as a non-terrestrial network (NTN) for providing broadband communications worldwide using a satellite constellation, it is possible to increase the speed of the downlink of the service link by regarding the ground station 3 as a user terminal such as a VSAT (Very Small Aperture Terminal). In addition, when communications from a mobile terminal are transferred to a radio base station (eNodeB : evolved Node B) through a feeder link between the artificial satellite 2 and the ground station 3 for satellite communications, the feeder link can be speeded up, leading to the expansion of services provided by information and communication service providers.

In addition, although FIG. 1 shows how the server 1 is directly connected to the ground station 3 wirelessly or by cable, the server 1 may be a cloud computer. In addition, the processing executed by the server 1 may be performed by an OBC (On Board Computer) on the artificial satellite.

In addition, in the present embodiment, the artificial satellite 2 will be described as communicating with the ground station 3, but the artificial satellite 2 may communicate with a geostationary satellite 30 instead of the ground station 3.

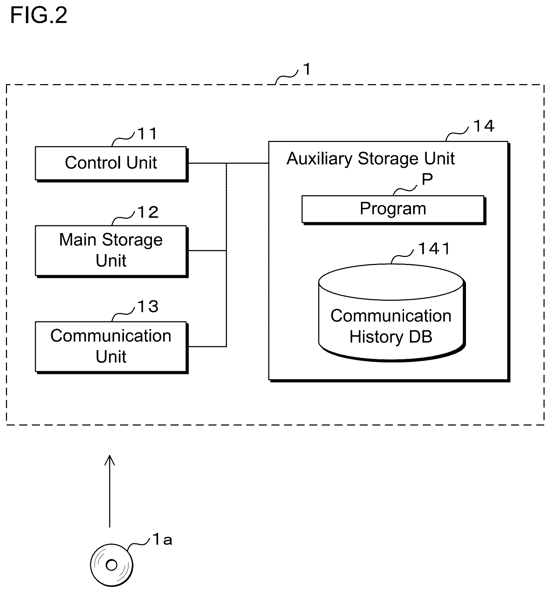

FIG. 2 is a block diagram showing an example of the configuration of the server 1. The server 1 includes a control unit 11, a main storage unit 12, a communication unit 13, and an auxiliary storage unit 14. The control unit 11 has one or more arithmetic processing devices such as a CPU (Central Processing Unit), an MPU (Micro-Processing Unit), and a GPU (Graphics Processing Unit), and performs various information processing, control processing, and the like by reading and executing a program P stored in the auxiliary storage unit 14. The main storage unit 12 is a temporary storage area such as a static random access memory (SRAM) and a dynamic random access memory (DRAM), and temporarily stores data required for the control unit 11 to execute arithmetic processing. The communication unit 13 is a communication module for performing communication-related processes, and transmits and receives information to and from the outside.

The auxiliary storage unit 14 is a non-volatile storage area such as a large-capacity memory or a hard disc, and stores the program P (program product) required for the control unit 11 to execute processing and other data. In addition, the auxiliary storage unit 14 stores a communication history DB 141. The communication history DB 141 is a database that stores the communication history between the artificial satellite 2 and the ground station 3.

The auxiliary storage unit 14 may be an external storage device connected to the server 1. In addition, the server 1 may be a multi-computer including a plurality of computers, or may be a virtual machine virtually constructed by software.

In addition, in the present embodiment, the server 1 is not limited to the above configuration, and may include, for example, an input unit that receives an operation input, a display unit that displays an image, and the like. In addition, the server 1 may include a reading unit that reads a portable storage medium 1a such as a CD (Compact Disc)-ROM or a DVD (Digital Versatile Disc)-ROM, and may read and execute the program P from the portable storage medium 1a.

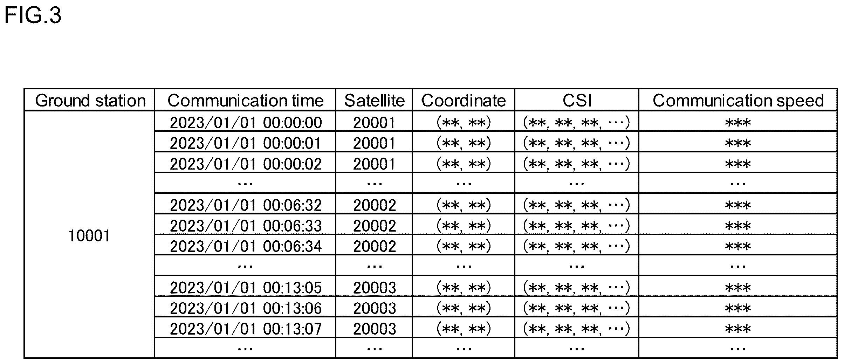

FIG. 3 is an explanatory diagram showing an example of the record layout of the communication history DB 141. The communication history DB 141 includes a ground station column, a communication time column, a satellite column, a coordinate column, a CSI (Channel State Information) column, and a communication speed column. The ground station column stores a ground station ID for identifying the ground station 3. The communication time column, the satellite column, the coordinate column, the CSI column, and the communication speed column store the communication time period during which the ground station 3 communicated with the artificial satellite 2, the ID of the artificial satellite 2 with which the ground station 3 communicated during that communication time period, the coordinates of the artificial satellite 2 at the time of communication, the CSI value measured at the time of communication, and the communication speed, respectively, in accordance with the ground station ID.

FIG. 4 is an explanatory diagram showing the orbit of the artificial satellite 2. FIG. 4 shows how a plurality of artificial satellites 2, 2, 2, ... form a satellite constellation and each artificial satellite 2 communicates with a specific ground station 3. An overview of the present embodiment will be described with reference to FIG. 4.

In the present embodiment, a plurality of artificial satellites 2, 2, 2, ... cooperate with each other to form a satellite constellation that performs communication processing. For example, the artificial satellite 2 is placed in the orbit shown in FIG. 4 and revolves around each orbit. In addition, when viewed from an inertial coordinate system fixed in outer space where both the movement of the artificial satellite 2 and the Earth's rotation and revolution are observed, the artificial satellite 2 moves on the orbit shown by the dashed line. At the same time, due to the Earth's rotation, the ground station 3 moves eastward, that is, to the right in the diagram. Therefore, the orbit of the artificial satellite 2 as viewed from the ground station 3, which shows the relative positional relationship between the artificial satellite 2 and the ground station 3, is a solid line. Communication between the artificial satellite 2 and the ground station 3 is performed by using electromagnetic waves. Specifically, the communication between the artificial satellite 2 and the ground station 3 is performed by switching between light and microwaves based on predetermined criteria or by using both light and microwaves simultaneously and appropriately setting the communication speed used for each. The predetermined criteria may be, for example, maximizing the total amount of optical and microwave transmission, minimizing the power consumed by the optical and microwave communication devices, or stopping one or both communications when communication is deemed impossible. In this system as well, as with general satellite constellation systems, the number of ground stations 3 is smaller than the number of artificial satellites 2. Therefore, each artificial satellite 2 communicates with the ground station 3 in time slots allocated at predetermined time intervals (for example, every ten minutes).

Here, a case is considered in which a specific artificial satellite 2 reserves communication with a specific ground station 3 in a time slot starting from a specific time. In this case, if the communication speed between the specific artificial satellite 2 and the specific ground station 3 can be predicted in advance, the artificial satellite 2 can control processing so as to communicate with the ground station 3 at the maximum communication speed. Therefore, the server 1 predicts the communication speed based on the communication history of other artificial satellites 2, 2, 2, ... that have completed communication with the specific ground station 3 before the specific time, and transmits the predicted communication speed to the specific artificial satellite 2. The range of other artificial satellites to be referred to for predicting the communication speed may be just one satellite that passed immediately before, or may be all satellites that passed in the past. However, taking into account temporal changes due to various factors, there are various methods for narrowing or weighting, such as restricting the time range in which the target satellite communicated within one day, within one hour, or the like or applying a forgetting factor so that data from further in the past is evaluated with smaller error when calculating estimation errors.

First, the server 1 acquires from the communication history DB 141 the orbital information, the CSI, and the communication speed when the other artificial satellites 2, 2, 2, ... communicated with the specific ground station 3. The orbital information is data regarding the orbit of the artificial satellite 2, and is data including at least the coordinates of the artificial satellite 2 at the time of communication (for example, coordinate data including longitude x and latitude y or TLE (Two Line Element set)). In the present embodiment, explanation will be given on the assumption that the orbital information is coordinate data of the artificial satellite 2 at the time of communication, which includes the longitude x and the latitude y.

In addition, as will be described in Embodiment 2 later, the orbital information may include not only the coordinates of the artificial satellite 2 but also the wind speed, weather (cloud cover, rainfall, and the like), and the like at the time of communication.

The CSI is data indicating the quality of communication between the artificial satellite 2 and the ground station 3, and is expressed as frequency characteristics such as the intensity ratio, amplitude ratio, and phase difference between the transmitted signal and the received signal. The communication speed is the communication capacity per unit time.

Data regarding the communication history, such as orbital information, CSI, and communication speed at the time of communication between each artificial satellite 2 and each ground station 3, is shared among a plurality of ground stations 3, 3, 3, ... through a terrestrial line. The server 1 acquires data when each ground station 3 communicates with the artificial satellite 2 through the terrestrial line and stores the acquired data in the communication history DB 141. The server 1 reads out the data from the communication history DB 141 and uses the read data to predict the communication speed.

The server 1 derives the correlation between the orbital information of the artificial satellite 2 and the communication speed based on the orbital information of the other artificial satellites 2, 2, 2, .... Specifically, the server 1 uses regression analysis to derive a regression equation, which has the orbital information as its explanatory variable and the communication speed as its target variable, using the least squares method.

In the present embodiment, the regression equation is derived taking into account not only the orbital information but also the CSI. First, based on the orbital information and the CSI of the other artificial satellites 2, 2, 2, ..., the server 1 derives a first regression equation (first correlation) f₁(x, y) having the orbital information as its explanatory variable and the CSI as its target variable. In addition, based on the orbital information, the CSI, and the communication speed of the other artificial satellites 2, 2, 2, ..., the server 1 derives a second regression equation (second correlation) f₂(x, y, CSI) having the orbital information and CSI as its explanatory variables and the communication speed as its target variable.

The server 1 acquires the current orbital information of the specific artificial satellite 2 that is a prediction target. The server 1 identifies (predicts) the CSI of the specific artificial satellite 2 based on the orbital information of the specific artificial satellite 2 and the first regression equation f₁(x, y) derived above. In addition, the server 1 calculates the communication speed of the specific artificial satellite 2 based on the identified CSI, the orbital information of the specific artificial satellite 2, and the second regression equation f₂(x, y, CSI) derived above. The server 1 transmits the calculated communication speed to the specific artificial satellite 2 of interest.

In addition, for simplicity, one regression equation is prepared herein for each of the CSI and the communication speed. However, when the frequency band used is wide or when the frequencies are far apart, such as not only between RF signals but also between light and RF signals, the regression equation or the values of the coefficients in the regression equation change depending on the frequency band. Therefore, it is also possible to consider preparing a regression equation for each subdivided frequency band. In addition, when the predicted value of the CSI or the communication speed drops significantly or when communication becomes impossible, it is also possible to consider stop communication in such a frequency band and use only the frequency band that is available for communication. This results in selective use of the communication frequency band.

As described above, according to the present embodiment, the correlation between the orbital information of the artificial satellite 2 and the communication speed is derived from the communication history of other artificial satellites 2, 2, 2, ... that have completed communication, and the communication speed between the artificial satellite 2 that is scheduled to communicate in the future and the ground station 3 is predicted (calculated) based on the derived correlation. In particular, in the present embodiment, the communication speed can be appropriately predicted by deriving the regression equation (correlation) taking the CSI into account. In addition, by selecting the communication frequency appropriately, power consumption of communication devices in the frequency band where communication is not possible can be reduced, and accordingly, it is possible to save power.

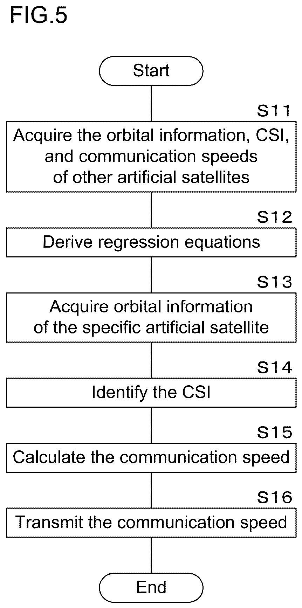

FIG. 5 is a flowchart showing an example of a processing procedure executed by the server 1. The processing executed by the server 1 will be described with reference to FIG. 5.

The control unit 11 of the server 1 acquires the orbital information, CSI, and communication speeds of other artificial satellites 2, 2, 2, ... that have completed communication with the specific ground station before the specific time, which are other artificial satellites 2, 2, 2, ... other than the specific artificial satellite 2 that has reserved communication with the specific ground station 3 in a time slot starting from a specific time, among a plurality of artificial satellites 2, 2, 2, ... placed in a predetermined orbit (step S11). The orbital information is data regarding the orbit of the artificial satellite 2, and includes at least the coordinates of the artificial satellite 2 at the time of communication. The CSI is data indicating the quality of communication between the artificial satellite 2 and the ground station 3, and is expressed as the intensity ratio, amplitude ratio, phase difference, and the like between the transmitted signal and the received signal. The communication speed is the communication capacity per unit time. Based on the acquired data such as orbital information, the control unit 11 derives a first regression equation (first correlation) between the orbital information and the CSI of the artificial satellite 2 and a second regression equation (second correlation) between the orbital information, the CSI, and the communication speed of the artificial satellite 2 using the least squares method (step S12).

The control unit 11 acquires orbital information of the specific artificial satellite 2 (step S13). The control unit 11 identifies the CSI of the specific artificial satellite 2 based on the acquired orbital information and the first regression equation of the orbital information and the CSI derived in step S12 (step S14). The control unit 11 calculates the communication speed of the specific artificial satellite 2 based on the identified CSI, the orbital information acquired in step S13, and the second regression equation of the orbital information, the CSI, and the communication speed derived in step S12 (step S15). The control unit 11 transmits the calculated communication speed to the specific artificial satellite 2 (step S16), and ends the series of processes.

As described above, according to Embodiment 1, communication between the artificial satellite 2 and the ground station 3 can be performed appropriately.

### (Embodiment 2)

In the present embodiment, a form will be described in which machine learning is used as a regression analysis method to predict the communication speed. In addition, the same contents as in Embodiment 1 are denoted by the same reference numerals, and the description thereof will be omitted.

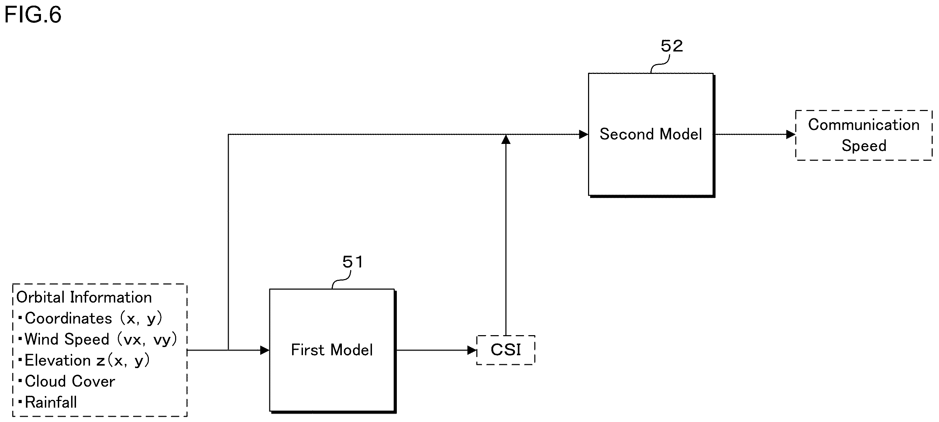

FIG. 6 is an explanatory diagram showing an overview of Embodiment 2. An overview of the present embodiment will be described with reference to FIG. 6.

In Embodiment 1, a form in which a regression equation for calculating the communication speed is derived has been described. In the present embodiment, the server 1 generates a machine learning model instead of the regression equation and uses the machine learning model to calculate the communication speed.

Specifically, the server 1 generates a first model 51 having the orbital information of the artificial satellite 2 as its input and the CSI as its output and a second model 52 having the orbital information and the CSI as its input and the communication speed as its output. FIG. 6 shows input and output images of the first model 51 and the second model 52. The first model 51 and the second model 52 are, for example, neural networks, but may also be models based on other learning algorithms. In addition, it is possible to combine an LSTM (Long Short-Term Memory) algorithm that is effective for recognizing time-series state changes, a CNN (Convolutional Neural Network) that can extract features for spatial or temporal expansion, an Attention algorithm which enables prioritized processing of truly important parts, and the like. In the previous embodiment, the prediction accuracy changes depending on how the regression equation is expressed. However, machine learning such as neural networks does not use mathematical expressions, and accordingly has an advantage of being generally applicable even in a situation where modeling using mathematical expressions is difficult.

In addition, in Embodiment 1, the orbital information is only the coordinates (x, y) of the artificial satellite 2, but in the present embodiment, other parameters are also used as orbital information as shown in FIG. 6. Specifically, wind speed (vx, vy) at the time of communication, the elevation z(x, y) of the terrain where the ground station 3 is located, and cloud cover and rainfall at the time of communication are added to the orbital information. In addition, as information such as wind speed and weather (cloud cover, rainfall), wind speed and weather within a range close to the communication path between the artificial satellite 2 and the ground station 3 (for example, within a 100 km distance from the communication path) are used. As the information such as wind speed and weather, either or both of external meteorological data and communication history of other artificial satellites 2, 2, 2, ... are used. By adding these parameters related to the communication between the artificial satellite 2 and the ground station 3, the communication speed can be predicted more appropriately.

The server 1 generates the first model 51 based on the orbital information and the CSI of other artificial satellites 2, 2, 2, ... other than the specific artificial satellite 2 that is a prediction target. That is, the server 1 generates the first model 51 by using the data of the other artificial satellites 2, 2, 2, ... as training data for machine learning. The server 1 outputs the CSI by inputting the orbital information for training to the first model 51, and optimizes parameters such as weights between neurons so that the value of the output CSI approximates the correct CSI. As a result, the server 1 generates the first model 51.

Similarly, the server 1 generates the second model 52 based on the orbital information, the CSI, and the communication speed of the other artificial satellites 2, 2, 2, .... The server 1 outputs the communication speed by inputting the orbital information and the CSI of the other artificial satellites 2 to the second model 52, and optimizes parameters such as the weights between neurons so that the output communication speed approximates the correct communication speed. As a result, the server 1 generates the second model 52.

When predicting the communication speed between the specific artificial satellite 2, which is prediction target, and the ground station 3, the server 1 identifies (outputs) the CSI by inputting the orbital information of the specific artificial satellite 2 to the first model 51. In addition, the server 1 calculates (outputs) the communication speed by inputting the identified CSI and the orbital information of the specific artificial satellite 2 to the second model 52. The server 1 transmits the calculated communication speed to the specific artificial satellite 2.

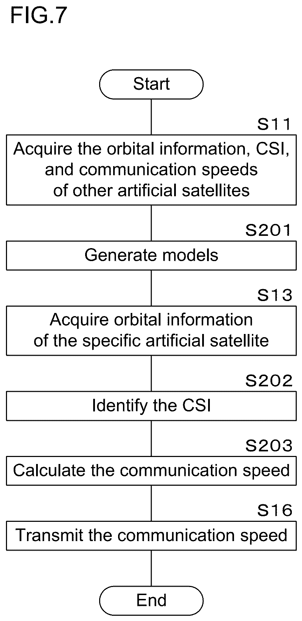

FIG. 7 is a flowchart showing an example of a processing procedure executed by the server 1 according to Embodiment 2. After acquiring the orbital information, CSI, and communication speeds of the other artificial satellites 2, 2, 2, ... (step S11), the server 1 executes the following processing.

Based on the acquired data such as orbital information, the control unit 11 of the server 1 generates the first model 51 that has been trained to output the CSI when the orbital information of the artificial satellite 2 is input and the second model 52 that has been trained to output the communication speed when the orbital information and the CSI of the artificial satellite 2 are input (step S201). For example, the control unit 11 generates neural networks (such as LSTM) as the first model 51 and the second model 52. The control unit 11 proceeds to step S13.

After acquiring the orbital information of the specific artificial satellite 2 (step S13), the control unit 11 identifies (outputs) the CSI by inputting the acquired orbital information to the first model 51 (step S202). The control unit 11 calculates (outputs) the communication speed by inputting the identified CSI and the orbital information acquired in step S13 to the second model 52 (step S203). The control unit 11 proceeds to step S16.

As described above, according to Embodiment 2, the communication speed may be predicted (calculated) using machine learning as a regression analysis method.

### (Embodiment 3)

In the present embodiment, a form will be described in which the communication speed is predicted using meteorological information or scatterer information in addition to the orbital information and the CSI of the artificial satellite 2.

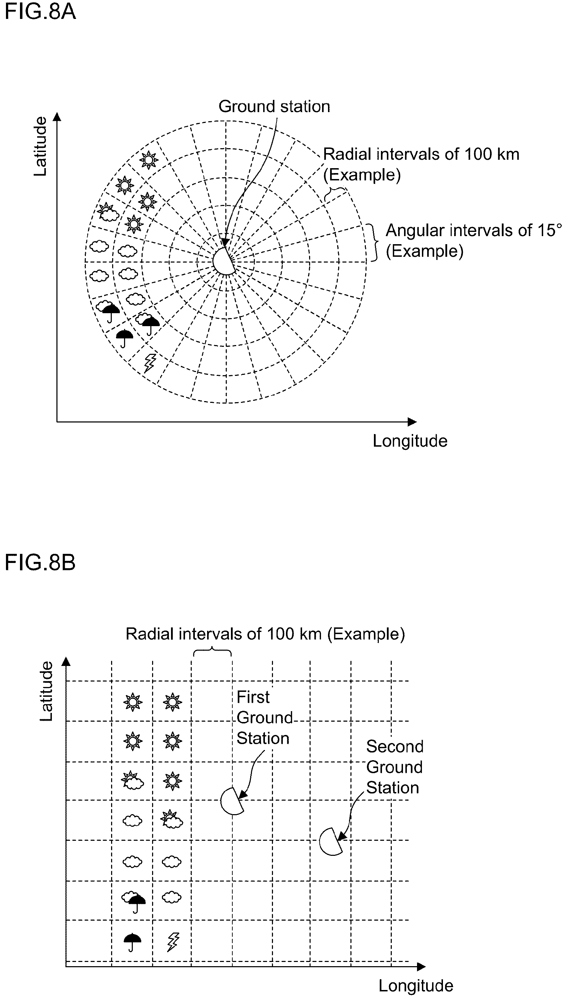

FIGS. 8A and 8B are explanatory diagrams showing an overview of Embodiment 3. An overview of the present embodiment will be described with reference to FIGS. 8A and 8B.

In the present embodiment, the server 1 predicts scatterer information by deriving a third regression equation f₃(x, y) that predicts the distribution and speed information of scatterers (hereinafter, referred to as scatterer information) that affect communication quality due to weather, based on orbital information and communication speed, and finally predicts the communication speed by deriving a fourth regression equation f₄(x, y, CSI, scatterer information) that predicts the communication speed based on the predicted scatterer information and the like. The scatterers referred to herein are specifically water vapor in the atmosphere, water droplets that fall, and ice that forms clouds. In contrast, the meteorological information is data indicating the weather conditions at arbitrary coordinates. For example, the weather information is data such as temperature and wind speed as well as data indicating the type of weather, such as "sunny", "cloudy", and "rainy". It is also possible to estimate the above scatterer distribution from the meteorological information and physical laws (Boyle-Charles's law, fluid dynamics, and solutions to inverse scattering problems, and the like). In addition, it is possible to estimate the most probable scatterer information by taking into account both the scatterer information estimated from the meteorological information and the scatterer information estimated from communication.

A specific image of the meteorological information is shown in FIGS. 8A and 8B. When there is one specific ground station 3 that is a prediction target, it is preferable to express the meteorological information in polar coordinates (r, θ) having the ground station 3 at its center, as shown in FIG. 8A. For example, the server 1 divides the area centered on the ground station 3 into regions at radial intervals of 100 km and angular intervals of 15°, and assigns meteorological information to each region. This makes it possible to reflect the fact that the data resolution is higher closer to the ground station 3.

On the other hand, when there are a plurality of specific ground stations 3 that are prediction targets, it is preferable to express the meteorological information in Cartesian coordinates (x, y) of longitude and latitude, as shown in FIG. 8B. For example, the server 1 divides the surface area into regions at 100 km intervals in the x direction (longitude) and the y direction (latitude), and assigns meteorological information to each region. This allows the same mapping to be used for all ground stations 3, thereby improving convenience.

Based on the orbital information of other artificial satellites 2, 2, 2, ... other than the specific artificial satellite 2 that is a prediction target, the server 1 derives not only the first regression equation f₁(x, y) (or f₁(r, θ) expressed in polar coordinates), which has the orbital information as its explanatory variable and the CSI as its target variable, but also derives a third regression equation (third correlation) f₃(x, y) having the orbital information as its explanatory variable and the scatterer information as its target variable and a fourth regression equation (fourth correlation) f₄(x, y, CSI, scatterer information) having the orbital information, the CSI, and the scatterer information as its explanatory variables and the communication speed as its target variable.

In addition, in the present embodiment as well, as in Embodiment 2, a machine learning model may be generated instead of the regression equation.

When predicting the communication speed between the specific artificial satellite 2 that is a prediction target and the specific ground station 3, the server 1 identifies the CSI based on the orbital information of the specific artificial satellite 2 and the first regression equation f₁(x, y) and also identifies the scatterer information based on the orbital information of the specific artificial satellite 2 and the third regression equation f₃(x, y). Then, the server 1 calculates the communication speed based on the identified CSI and scatterer information, the orbital information of the specific artificial satellite 2, and the fourth regression equation f₄(x, y, CSI, scatterer information). The server 1 transmits the calculated communication speed to the specific artificial satellite 2.

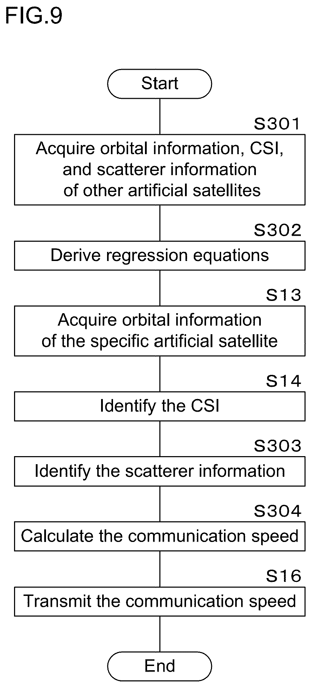

FIG. 9 is a flowchart showing an example of a processing procedure executed by the server 1 according to Embodiment 3.

The control unit 11 of the server 1 acquires orbital information, CSI, and scatterer information of other artificial satellites 2, 2, 2, ... other than the specific artificial satellite 2 that has reserved communication with the specific ground station 3 in a time slot starting from a specific time (step S301). Based on the acquired data, the control unit 11 derives not only the first regression equation for identifying the CSI from the orbital information but also a third regression equation (third correlation) having the orbital information as its explanatory variable and the scatterer information as its target variable and a fourth regression equation (fourth correlation) having the orbital information, the CSI, and the scatterer information as its explanatory variables and the scatterer information as its target variable (step S302). The control unit 11 proceeds to step S13.

After identifying the CSI based on the first regression equation (step S14), the control unit 11 identifies the scatterer information based on the orbital information of the specific artificial satellite 2 and the third regression equation derived in step S302 (step S303). The control unit 11 calculates the communication speed based on the identified CSI and scatterer information, the orbital information of the specific artificial satellite 2, and the fourth regression equation derived in step S302 (step S304). The control unit 11 proceeds to step S16.

As described above, according to Embodiment 3, by adding the meteorological information or the scatterer information as an explanatory variable for calculating the communication speed, it is possible to predict the communication speed more appropriately.

### (Embodiment 4)

In the present embodiment, a form will be described in which, when the artificial satellite 2 includes a multi-beam antenna capable of communicating with a plurality of ground stations 3 simultaneously, the ratio of power to be allocated to communication with each ground station 3 is calculated according to the communication speed predicted for each ground station 3.

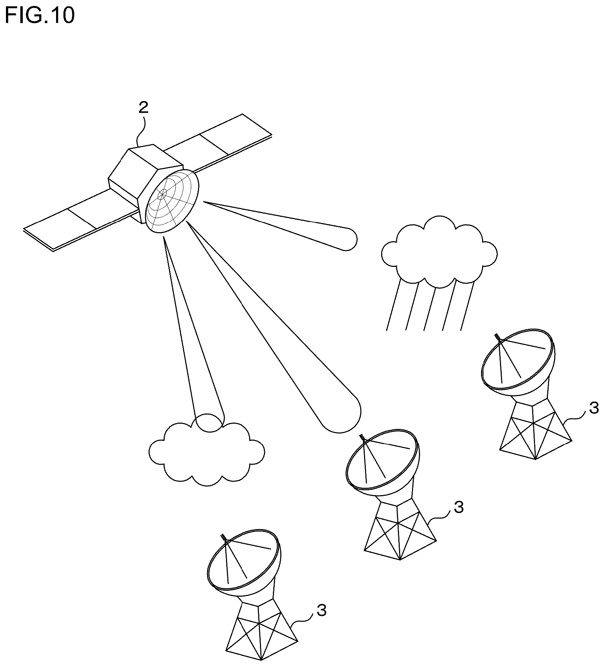

FIG. 10 is an explanatory diagram showing an overview of Embodiment 4. An overview of the present embodiment will be described with reference to FIG. 10.

FIG. 10 shows how the artificial satellite 2 includes a multi-beam antenna having directivity in a plurality of directions and performs communications with ground stations 3, 3, 3 located in each pointing direction. In the present embodiment, the artificial satellite 2 includes a multi-beam antenna that can be directed in a plurality of directions at the same time, and radiates beams in each of the pointing directions.

Here, the communication speed for each ground station 3 may change depending on the weather and the like. For example, as shown in FIG. 6, in the area between the artificial satellite 2 and the ground station 3 at the center, it is sunny, so that it is possible to secure the sufficient communication speed. On the other hand, in the area between the artificial satellite 2 and the ground station 3 at the bottom left, it is cloudy, so that the communication speed is lower than that in the case of the ground station 3 at the center. In addition, in the area between the artificial satellite 2 and the ground station 3 at the upper right, it is raining, so that the communication speed is even lower.

Therefore, in the present embodiment, the server 1 predicts the communication speed in each pointing direction (direction from the artificial satellite 2 to each ground station 3), and calculates the ratio of power required to radiate beams in each pointing direction according to the predicted communication speed in each pointing direction. The server 1 transmits the calculated power ratio to the artificial satellite 2, thereby making a control so that communication in each pointing direction can be performed with optimal power distribution.

Specifically, when deriving the first regression equation f₁(x, y) and the second regression equation f₂(x, y, CSI), the server 1 derives the first regression equation f₁(x, y) for calculating the CSI at the time of communication with the ground station 3 located in each of a plurality of pointing directions and the second regression equation f₂(x, y, CSI) for calculating the communication speed in each of the plurality of pointing directions. That is, the server 1 acquires the CSI and the communication speed for each of the plurality of pointing directions as the communication history of other artificial satellites 2, 2, 2, ... other than the specific artificial satellite 2 that is a prediction target, and based on the CSI and the communication speed in each pointing direction of the other artificial satellites 2, derives f₁(x, y) having the CSI at the time of communication with the ground station 3 in each pointing direction as its target variable and the second regression equation f₂(x, y, CSI) having the communication speed in each pointing direction as its target variable.

When predicting the communication speed of a specific artificial satellite 2 that is an actual prediction target, the server 1 calculates the communication speed in each of the plurality of pointing directions based on the first regression equation f₁(x, y) and the second regression equation f₂(x, y, CSI). That is, the server 1 first calculates the CSI corresponding to each pointing direction based on the orbital information of the specific artificial satellite 2 and the first regression equation f₁(x, y), as in Embodiment 1. Then, the server 1 calculates the communication speed in each pointing direction based on the calculated CSI, the orbital information of the specific artificial satellite 2, and the second regression equation f₂(x, y, CSI).

The server 1 calculates the ratio of power to be allocated to communication (beam radiation) in each pointing direction according to the calculated communication speed in each pointing direction. Specifically, the server 1 calculates the ratio of power to be allocated to communication in each pointing direction by using the steepest gradient method or singular value decomposition, so that the beam intensity proportional to the calculated communication speed in each pointing direction can be obtained. The server 1 transmits the calculated power ratio to the artificial satellite 2.

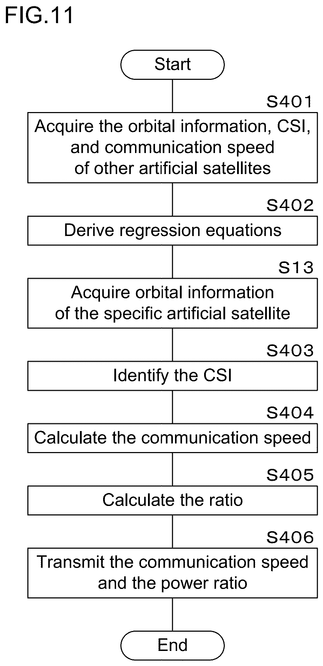

FIG. 11 is a flowchart showing an example of a processing procedure executed by the server 1 according to Embodiment 4.

The control unit 11 of the server 1 acquires the orbital information, CSI, and communication speeds of other artificial satellites 2, 2, 2, ... other than the specific artificial satellite 2 that has reserved communication with the specific ground station 3 in a time slot starting from a specific time (step S401). In the present embodiment, the control unit 11 acquires CSI and communication speed in each of a plurality of pointing directions as the CSI and the communication speed of the other artificial satellites 2. Based on the acquired data of the other artificial satellites 2, the control unit 11 derives not only a first regression equation (first correlation) having the orbital information as its explanatory variable and the CSI in each pointing direction as its target variable but also a second regression equation (second correlation) having the orbital information and the CSI as its explanatory variables and the communication speed in each pointing direction as its target variable (step S402). The control unit 11 proceeds to step S13.

The control unit 11 identifies the CSI in each pointing direction based on the orbital information acquired in step S13 and the first regression equation derived in step S402 (step S403). Then, the control unit 11 calculates the communication speed in each pointing direction of the specific artificial satellite 2 based on the identified CSI in each pointing direction, the orbital information of the specific artificial satellite 2, and the second regression equation (step S404). The control unit 11 calculates the ratio of power to be allocated to communication in each pointing direction according to the calculated communication speed in each pointing direction (step S405). Specifically, the control unit 11 calculates the ratio of power to be allocated to communication in each pointing direction so as to be proportional to the calculated communication speed in each pointing direction. The control unit 11 transmits the communication speed calculated in step S404 and the power ratio calculated in step S405 to the specific artificial satellite 2 (step S406), and ends the series of processes.

As described above, according to Embodiment 4, when the artificial satellite 2 includes a multi-beam antenna, it is possible to optimize the power required for communication in each pointing direction.

It should be considered that the embodiments disclosed are examples in all points and not restrictive. The scope of the present invention is defined by the claims rather than the meanings set forth above, and is intended to include all modifications within the scope and meaning equivalent to the claims.

The features described in the embodiments can be combined with each other. In addition, the independent claims and the dependent claims described in the claims can be combined with each other in all combinations, regardless of the citation form. In addition, although the form of multiple claims that cite two or more other claims (multi-claim form) is used in the scope of claims, the present invention is not limited thereto. A form of multi-claim (multi-multi claim) that cites at least one multi-claim may also be written.

### Reference Signs List

- 1: server (information processing apparatus)
- 11: control unit
- 12: main storage unit
- 13: communications unit
- 14: auxiliary storage unit
- p1: program
- 141: communication history DB
- 2: artificial satellite
- 3: ground station

## Claims

1. An information processing method for causing a computer to execute processing of:
acquiring orbital information of a specific artificial satellite that has reserved communication with a specific ground station in a time slot starting from a specific time, among a plurality of artificial satellites placed in a predetermined orbit, and orbital information and communication speeds of other artificial satellites other than the specific artificial satellite that have completed communication with the specific ground station before the specific time;
deriving a correlation between orbital information and a communication speed of an artificial satellite based on the orbital information and the communication speeds of the other artificial satellites;
calculating a communication speed of the specific artificial satellite based on the derived correlation and the orbital information of the specific artificial satellite; and
transmitting the calculated communication speed to the specific artificial satellite.

2. The information processing method according to claim 1,
wherein channel state information of the other artificial satellites is further acquired,
a first correlation between orbital information and channel state information of an artificial satellite is derived based on the orbital information and the channel state information of the other artificial satellites,
a second correlation between orbital information and channel state information of an artificial satellite and its communication speed is derived based on the orbital information, the channel state information, and the communication speeds of the other artificial satellites,
channel state information of the specific artificial satellite is identified based on the first correlation and the orbital information of the specific artificial satellite, and
the communication speed of the specific artificial satellite is calculated based on the second correlation and the orbital information and the channel state information of the specific artificial satellite.

3. The information processing method according to claim 1,
wherein, based on the orbital information and the communication speeds of the other artificial satellites, a regression equation having orbital information of an artificial satellite as its explanatory variable and communication speed of the artificial satellite as its target variable is derived using a least squares method, and
the communication speed of the specific artificial satellite is calculated based on the derived regression equation and the orbital information of the specific artificial satellite.

4. The information processing method according to claim 1,
wherein a model trained to calculate a communication speed when orbital information of an artificial satellite is input based on the orbital information and the communication speeds of the other artificial satellites is generated, and
the communication speed of the specific artificial satellite is calculated by inputting the orbital information of the specific artificial satellite to the generated model.

5. The information processing method according to claim 1,
wherein communication between the artificial satellite and the ground station is performed by electromagnetic waves.

6. The information processing method according to claim 5,
wherein the communication between the artificial satellite and the ground station is performed by switching between light and microwaves or by using both light and microwaves simultaneously.

7. The information processing method according to claim 1,
wherein there are a plurality of the ground stations, and
the orbital information and the communication speeds of the other artificial satellites are acquired by sharing data regarding the orbital information and the communication speeds among the plurality of ground stations through a terrestrial line.

8. The information processing method according to claim 1,
wherein scatterer information at positions corresponding to the other artificial satellites is acquired,
a third correlation between orbital information and scatterer information of an artificial satellite is derived based on the orbital information and the scatterer information of the other artificial satellites,
a fourth correlation between orbital information and scatterer information and a communication speed is derived based on the orbital information, the scatterer information, and the communication speeds of the other artificial satellites,
scatterer information at a position corresponding to the specific artificial satellite is identified based on the third correlation and the orbital information of the specific artificial satellite, and
the communication speed of the specific artificial satellite is calculated based on the fourth correlation and the orbital information and the scatterer information of the specific artificial satellite.

9. The information processing method according to claim 1,
wherein the artificial satellite includes a multi-beam antenna capable of directing beams in a plurality of directions simultaneously,
a communication speed in each pointing direction of the other artificial satellites is acquired,
a correlation between orbital information of an artificial satellite and its communication speed in each pointing direction is derived based on the orbital information of the other artificial satellites and the communication speed in each pointing direction,
a communication speed in each pointing direction of the specific artificial satellite is calculated based on the derived correlation and the orbital information of the specific artificial satellite, and
a ratio of power to be allocated to communication in each pointing direction is calculated based on the calculated communication speed in each pointing direction.

10. A program causing a computer to execute processing of:
acquiring orbital information of a specific artificial satellite that has reserved communication with a specific ground station in a time slot starting from a specific time, among a plurality of artificial satellites placed in a predetermined orbit, and orbital information and communication speeds of other artificial satellites other than the specific artificial satellite that have completed communication with the specific ground station before the specific time;
deriving a correlation between orbital information and a communication speed of an artificial satellite based on the orbital information and the communication speeds of the other artificial satellites;
calculating a communication speed of the specific artificial satellite based on the derived correlation and the orbital information of the specific artificial satellite; and
transmitting the calculated communication speed to the specific artificial satellite.

11. An information processing apparatus, comprising:
a control unit,
wherein the control unit acquires orbital information of a specific artificial satellite that has reserved communication with a specific ground station in a time slot starting from a specific time, among a plurality of artificial satellites placed in a predetermined orbit, and orbital information and communication speeds of other artificial satellites other than the specific artificial satellite that have completed communication with the specific ground station before the specific time, derives a correlation between orbital information and a communication speed of an artificial satellite based on the orbital information and the communication speeds of the other artificial satellites, calculates a communication speed of the specific artificial satellite based on the derived correlation and the orbital information of the specific artificial satellite, and transmits the calculated communication speed to the specific artificial satellite.
